Europäisches Patentamt

(19) European Patent Office

Office européen des brevets

(11) Publication number: **0 130 834**
**B1**

(12) EUROPEAN PATENT SPECIFICATION

(45) Date of publication of patent specification: **02.03.88**

(21) Application number: **84304507.1**

(22) Date of filing: **29.06.84**

(51) Int. Cl.⁴: **B 32 B 7/02,** B 32 B 15/08 // C23C28/02

(54) **Duplex metal alloy/polymer compositions.**

(30) Priority: **01.07.83 US 510029**

(43) Date of publication of application:
**09.01.85 Bulletin 85/02**

(45) Publication of the grant of the patent:
**02.03.88 Bulletin 88/09**

(84) Designated Contracting States:
**BE DE FR GB IT NL SE**

(56) References cited:
**DE-B-1 006 692**
**FR-A- 842 019**
**FR-A-2 120 174**
**GB-A- 928 267**
**US-A-2 740 732**

(73) Proprietor: **THE DOW CHEMICAL COMPANY**
**2030 Dow Center Abbott Road P.O. Box 1967**
**Midland, MI 48640 (US)**

(72) Inventor: **Kurfman, Virgil B.**
**1101 Helen Street**
**Midland Michigan 48640 (US)**

(74) Representative: **Burford, Anthony Frederick et al**
**W.H. Beck, Greener & Co. 7 Stone Buildings Lincoln's Inn**
**London WC2A 3SZ (GB)**

**Description**

This invention relates to a method of preparing multilayer metal/organic polymer composites. The multilayer composites have at least one thermoplastic organic polymer layer, a first metal layer adhered to at least one surface of the polymer layer and at least one additional metal layer adhered to the first metal layer. This invention also relates to the multilayer composites so prepared and to articles formed from such multilayer composites.

Metallized plastic articles have been prepared by applying a metal layer to a plastic material. Application of the metal layer has been accomplished by vacuum deposition, electrolytic or electroless deposition, foil lamination or similar metallizing techniques. Metallized plastic films so prepared have been used for decorative purposes because of properties such as flexibility and ability to be shaped to some extent to conform to various contours.

Unfortunately, the degree to which earlier versions of such metallized films or sheets or other articles can be shaped without rupture and/or separation of the metal from the polymer is limited. Accepted limitations include restricting localized dimensional changes to less than 25% in one direction and less than 20% in area.

Metallized films prepared in accordance with U.S. Patent Nos. 4,115,619 and 4,211,822, are limited in terms of extensibility to an increase in area of at least 30%, preferably from 50 to 300%. A noticeable loss in both specular reflectance and optical density results at points of excessive elongation when such metallized films are stretched beyond the aforementioned limits. Even within said limits, a marked loss of optical density occurs when the metallized films are stretched at a forming temperature which exceeds the film's glass transition temperature, in Kelvins, by 5 percent or more.

A formed article, where excessive stretching has taken place, has a marred appearance and diminished utility in decorative, electrical and packaging applications.

It would be desirable if there were available a process for preparing a multilayer, metal/organic polymer composite having at least two compositionally different metal alloy layers adhered to a surface of a thermoplastic organic polymer layer. Such a composite, after an increase in area of at least 30 percent, beneficially from 50 to 300 percent would desirably exhibit excellent specular reflectance, electroconductivity and barrier to vapor transmission.

It would also be desirable if the multilayer composite so produced had a high retention of optical density after being extended to an area which is at least 30 percent, desirably from 50 to 300 percent, greater than its original area. The multilayer composite has a high retention of optical density if it has an optical density, after extension, of at least 2, beneficially at least 3, and desirably at least 4.

In its broadest product aspect, the invention provides a duplex metal/organic polymer multilayer composite structure comprising at least one normally solid, formable thermoplastic polymer layer and a first normally solid metal layer intimately adhered to a planar surface of the polymer layer, characterised in that

the first metal layer is formed of an alloy or of a metal selected from copper, silver, nickel and manganese,

a second normally solid metal layer formed of an alloy or of a metal is intimately adhered to the first metal layer, and

the relationship between the materials of the first and second layers is that a solid metallic phase is maintained in contact with at least a portion of the polymer layer at the forming temperature and either:—

(a) the first metal layer is formed of an alloy melting at a temperature between 85 and 150 percent of the forming temperature of the polymer layer and the second metal layer is formed of an alloy or metal melting at a temperature below the melting temperature of said alloy of the first metal layer, or

(b) the first and second metal layers when heated together at a temperature (1), when the first metal layer is formed of an alloy, between the solidus temperature and the liquidus temperature of the first metal layer and greater than the liquidus temperature of the second metal layer or (2), when the first metal layer is formed of one metal, between the forming temperature and the degradation temperature of the polymer layer, form a segregated alloy melting at a temperature between 80 and 135 percent of the forming temperature of the polymer layer,

all temperatures being in Kelvins.

In its broadest method aspect, the invention provides a method of preparing a duplex metal/organic polymer multilayer composite structure of the invention said method comprising providing at least one normally solid, formable thermoplastic polymer layer having intimately adhered to a planar surface of the polymer layer a first metal layer formed of an alloy or of a metal selected from copper, silver, nickel and manganese, and intimately adhering to the first metal layer a second normally solid metal layer formed of an alloy or of a metal, wherein the relationship between the materials of the first and second layers is that a solid metallic phase is maintained in intimate contact with at least a portion of the polymer layer at the forming temperature and either:

(a) the first metal layer is formed of an alloy melting at a temperature between 85 and 150 percent of the forming temperature of the polymer layer and the second metal layer is formed of an alloy or metal melting at a temperature below the melting temperature of said alloy of the first metal layer, or

(b) the first and second metal layers when heated together at a temperature (1), when the first metal

# 0 130 834

layer is formed of an alloy, between the solidus temperature and liquidus temperature of the first metal layer and greater than the liquidus temperature of the second metal layer or (2), when the first metal layer is formed of one metal, between the forming temperature and the degradation temperature of the polymer layer, form a segregated alloy melting at a temperature between 80 and 135 percent of the forming temperature of the polymer layer,

all temperatures being in Kelvins.

Suitably, the alloy of the first metal layer is an alloy containing two or more metals selected from cadmium, indium, tin, antimony, lead, bismuth, and zinc. Said alloy may also contain copper in an amount of from 5 to 40 percent by weight of alloy or silver in an amount of from 5 to 75 percent by weight of alloy. Suitably, second metal layer is formed from an alloy containing two or more metals selected from cadmium, indium, tin, antimony, lead, bismuth and zinc.

In one preferred embodiment the first metal layer is of such a composition and proportion relative to the second metal layer that intermetallic phases formed by interaction between the metal layers do not increase the liquidus temperature of the second metal layer by more than 30 Kelvins above the eutectic temperature of the second metal layer. Advantageously, the metal of the second metal layer is at least 75 weight percent liquid, based on weight of said second metal layer, at a temperature which is not more than 25 Kelvins above the eutectic temperature of the second metal layer.

A preferred metal of the second metal layer is an alloy which comprises at least 30 weight percent tin and at least 40 weight percent bismuth, both percentages being based upon weight of alloy.

In one preferred embodiment of the method of the invention, the metal of the first metal layer has a solidus temperature (in Kelvins) between 85 and 98 percent of the forming temperature (in Kelvins) of the thermoplastic polymer and a liquidus temperature (in Kelvins) between 102 and 150 percent of the forming temperature (in Kelvins) of the thermoplastic polymer, and the metal of the second metal layer has a liquidus temperature below the liquidus temperature of the metal alloy of the first metal layer.

In another preferred embodiment of the method of the invention, the first metal layer is formed from a metal selected from copper, silver, nickel and manganese; and the second metal layer is formed from a metal or an alloy, said second metal layer being in such a proportional relationship with respect to the first metal layer that the two metal layers, when taken together and heated to the forming temperature of the polymer layer, form a segregated alloy, the segregated alloy having a melting temperature (in Kelvins) between 80 and 135 percent of the forming temperature (in Kelvins) of the polymer layer.

Preferably, the second metal layer is applied to the first metal layer while the metal of the second metal layer is at a temperature greater than its liquidus temperature and between the solidus temperature and the liquidus temperature of the first metal layer.

Surprisingly, the formed composite of this invention exhibits specular brightness, barrier, optical density and/or electrical continuity that are nearly the same as those of the composite prior to forming. In fact, the metal/organic polymer composites of the present invention usually exhibit electrical resistivities less than 5 ohms per square even after forming. Electrical resistivities, after forming, are preferably on the order of about 1 ohm per square or less.

The metal layer of the formed composite of this invention remains strongly adhered to the polymer layer. Strong adhesion is obtained even though forming of the composite is carried out at temperatures at which most, if not all, of the metal in the two metal layers is in the melted state and the polymer layer is in a heat-plastified state or nearly so.

In order to better understand the present invention, the following definitions, abstracted from pages 1—16, *Metals Handbook*, copyright 1948, are provided:

(a) alloy:

a substance that has metallic properties and is composed of two or more chemical elements of which at least one is a metal;

(b) coring:

variable composition in solid-solution dendrites; the center of the dendrite is richer in one element, as shown by the pertinent solidus-liquidus lines in a pahse diagram;

(c) dendrite:

a crystal formed usually by solidification and characterized by a treelike pattern composed of many branches; also termed "pine tree" and "fir tree" crystal;

(d) gravity segregation:

variable composition caused in a casting by the settling of the heavier constituents;

(e) inverse segregation:

a concentration of certain alloy constituents that have lower melting points, in the region corresponding to that first solidifying; caused by interdendritic flow of enriched liquid through channels where the pressure drops with contraction of dendrites. The internal evolution of hydrogen may also give a positive pressure, aiding this flow and causing a liquated surface or tin sweat;

(f) liquated surface:
   a surface of an ingot that exhibits exudations or protuberances as a result of inverse segregation;

(g) liquation:
   the partial melting of an alloy, which can be used to effect a separation of two or more constituents;

(h) segregation:
   in an alloy object, concentration of alloying elements at specific regions, usually as a result of the primary crystallization of one phase with the subsequent concentration of other elements in the remaining liquid. Microsegregation refers to normal segregation on a microscopic scale whereby material richer in alloying element freezes in successive layers on the dendrites (coring) and in the constituent network. Macrosegregation refers to gross differences in concentration (for example, from one area of an ingot to another, which may be normal, inverse or gravity segregation.

Polymers suitably employed as the polymer layer(s) of the multilayer composites of this invention are those normally solid, organic, formable, thermoplastic polymers that are readily shaped or molded or otherwise fabricated into desired forms. As used herein, "formable" means the polymer can be stretched or otherwise extended without rupturing to occupy an area at least 30% greater than its original area, suitably from 50 to 300% greater than its original area.

The term "thermoplastic" as used herein is intended to include all synthetic resins that may be softened by heat and then regain their original properties upon cooling. Also included within this term are thermosetting resins in the B state, i.e., that stage prior to crosslinking wherein the thermosetting resin exhibits heat plastification characteristics of a thermoplastic resin. In some preferred embodiments, the thermoplastic polymers are also generally transparent.

Because of their lower cost and superior structural properties, polymers of particular interest in the practice of this invention include engineering thermoplastics. Suitable engineering thermoplastics include polystyrene, styrene/acrylonitrile copolymers, copolymers containing polymerized styrene, acrylonitrile and butadiene (often called ABS polymers), styrene/butadiene copolymers, rubber modified styrene polymers, styrene/maleic anhydride copolymers and similar polymers of monovinylidene aromatic carbocyclic monomers; polycarbonates including those made from phosgene and bisphenol A and/or phenolphthalein; polyesters such as polyethylene terephthalate; acrylic resins such as poly(methyl methacrylate); polyacetal resins such as polyformaldehyde resin; nitrile resins such as polyacrylonitrile and other polymers of $\alpha,\beta$-ethylenically unsaturated nitriles such as acrylonitrile/methyl methacrylate copolymers; polyamides such as nylon; polyolefins such as polyethylene and polypropylene; polyvinyl halides such as polyvinylchloride and vinylidene halide, especially chloride, homopolymers and copolymers; polyurethanes; polyallomers; polyphenylene oxides; polymers of fluorinated olefins such as polytetrafluoroethylene; and other normally solid polymers which can be formed while in the solid state into a desired shape by conventional forming techniques. Conventional forming techniques include cold drawing, vacuum drawing, drape molding, pressure thermoforming, and scrapless thermoforming procedures.

Large extensions of polymer film layers and of metal layers are usually accomplished by using high temperatures and/or high pressure. The use of high pressure processes allows extensive deformation without rupture.

With the present invention, increases in area of the multilayer composite of up to about 300% are attainable without using high pressure processes.

Preferred polymers, particularly where toughness and transparency are desired, are the polycarbonates. Preferred polycarbonates are those derived from the bis(4-hydroxyphenol)alkylidenes (often called bisphenol A types) and those derived from the combination of such bisphenol A type diols with phenolphthalein type diols.

The polymer layer of the multilayered composite may also contain one or more additaments provided said additaments do not interfere with performance of the composite. Suitable additaments include dyes, light stabilizers, reinforcement fillers and fibers, pigments and carbon black.

Polymer layer thickness is not particularly critical. The polymer layer is of suitable thickness if it meets two limitations. First, it must be capable of being formed into a continuous layer which will have the necessary strength to survive conditions normal to its intended use. Second, it must be capable of withstanding rupturing during thermoforming. The thickness of the polymer layer(s) is beneficially in the range from 2 to 10,000 micrometers, preferably from 10 to 500 micrometers.

The first metal layer and the second metal layer, when heated together at a temperature (1), when the first metal layer is formed of an alloy between the solidus temperature and liquidus temperature of the first metal layer and greater than the liquidus temperature of the second metal layer or (2), when the first metal layer is formed of one metal, between the forming temperature and the degradation temperature of the polymer layer, form a duplex alloy structure. The duplex alloy structure of the multilayer composite imparts specular reflectance and electroconductivity when such are desired. The duplex alloy structure of the multilayer composite is particularly suitable for imparting high barrier and high optical density to the composite.

**0 130 834**

The first metal layer is formed either from one metal or from an alloy of two or more metals.

If the first metal layer is to be formed from one metal, the metal is selected from copper, silver, nickel and manganese. Each of these metals has a melting point which exceeds the forming temperature of any of the thermoplastic polymers suitable for use in the present invention. It has been found that melting of the first metal layer is not required for the formation of a duplex alloy structure. Heating the multilayer composite structure to a temperature which equals or exceeds the forming temperature of the polymer layer will ensure formation of the duplex alloy structure. Care must be taken, however, not to exceed a temperature at which the polymer layer degrades or decomposes.

If the first metal layer is to be formed from an alloy, the alloy is desirably one which begins melting at a temperature or over a range of temperatures that is within a particular temperature range. The particular temperature range is from 85 to 150 percent of the forming temperature ($T_f$), in Kelvins, of the thermoplastic polymer layer.

The alloy of the first metal layer beneficially has a solidus temperature ($T_s$) which is within a temperature range of from 0.85 $T_f$ to 0.98 $T_f$. The solidus temperature is that temperature in Kelvins at which the alloy just begins to liquefy.

The alloy of the first metal layer also beneficially has a liquidus temperature ($T_l$) which is within a temperature range of from 1.02 Tf to 1.50 Tf. The liquidus temperature is that temperature in Kelvins at which the metal alloy is entirely liquid. In other words, the alloy of the first metal layer should be at most only partially liquid at the forming temperature of the polymer layer when the composite is being formed in order to maintain a solid metallic phase in intimate contact with at least a portion of the polymer layer at the forming temperature.

It has been found that if the solidus temperature of the alloy of the first metal layer is less than about .85$T_f$, the alloy may have a tendency to "bead up" on the surface of the thermoplastic polymer layer rather than form a generally uniform layer thereon.

For purposes of the present invention, a solidus temperature which is greater than about 1.2$T_f$ restricts the extent to which the composite structure may be thermoformed without rupturing either the polymer layer or the duplex alloy structure of said composite structure.

In the same manner, a liquidus temperature which is less than 1.02$T_f$ may lead to "beading up". A liquidus temperature which is greater than about 1.50$T_f$ may restrict thermoformability of the composite.

The second metal layer comprises a metal or an alloy of two or more metals. The metal or metal alloy of the second metal layer suitably melts at a temperature, or over a range of temperatures, which is lower than that at which, or over which, the metal or alloy of the first metal layer melts.

The metal or alloy of the second metal layer beneficially has a liquidus temperature, in Kelvins, which is within a temperature range of from 0.90 to 1.25 $T_f$, desirably from 0.95 to 1.10 $T_f$.

The metal or alloy of the second metal layer has a solidus temperature, in Kelvins, which is beneficially within a temperature range of from 0.80 to 0.98 $T_f$, desirably from 0.85 to 0.95 $T_f$.

It will be understood that, as the purity of a single metal increases, the difference between the solidus and the liquidus temperatures decreases until, with a pure metal, they coincide at the melting point of the metal.

Desirably, the liquidus and solidus temperature of the metal layer or alloy of the second metal layer are such that when the alloy of the first metal layer is about 50 weight percent liquid, the metal or alloy of the second metal layer is greater than 95 weight percent liquid, based on respective metal layers.

The first and second metal layers are beneficially in such a proportional relationship with respect to each other that, when taken together and heated to a specific temperature, they form a segregated metal alloy of at least two metals. The segregated metal alloy melts at a temperature or over a range of temperatures that is from 80 to 135 percent of the forming temperature, in Kelvins, of the thermoplastic polymer layer.

If the first metal layer is formed from one metal, the specific temperature is within a temperature range which depends upon polymer layer properties. The temperature range has a lower end and an upper end. The lower end is the forming temperature of the polymer layer. The upper end is the temperature at which the polymer layer degrades.

If the first metal layer is formed from an alloy of two or more metals, the specific temperature must meet two criteria. First, the specific temperature must be between the solidus and liquidus temperatures of the first metal layer. Second, the specific temperature must be greater than the liquidus temperature of the second metal layer.

Desirably, the first metal layer has a specific composition and proportion relative to the second metal layer. The composition is such that intermetallic phases formed by interaction between the first and second metal layers do not increase the liquidus temperature of the second metal layer beyond 135 percent of the forming temperature of the thermoplastic polymer layer.

The first and second metal layers discussed herein will, when placed in intimate contact with each other, show a discernible degree of intermingling and mutual alloying. If relatively low melting metal alloys are used in the first and second metal layers, such mutual alloying will be appreciable after two or three days, even at room temperature. If the metal alloys used in the first and second metal layers exhibit significant mutual solid solubility, mutual alloying will be especially pronounced. *See,* M. Hansen, *Constitution of Binary Alloys,* McGraw-Hill Book Company, Inc.

5

The first and second metal layers are suitably selected from closely related metal alloy systems. This will minimize potential adverse effects resulting from mutual alloying.

One potential adverse effect is that mutual alloys which are formed will have melting points or melting point ranges which are undesirable. The melting points or melting point ranges are undesirable when they are either too high or too low. Mutual alloys having melting points or ranges which are too high develop cracks, crevices and voids when subjected to stress at the forming temperature of the thermoplastic polymer layer. Mutual alloys having melting points or ranges which are too low exhibit "beading up" on the polymer layer. In severe cases, mutual alloys having melting points or ranges which are too low promote delamination of the metal layers from the polymer layer.

A second potential adverse effect is the formation of galvanic couples. Galvanic couples are undesirable because they generally lead to poor corrosion resistance.

The alloy compositions for the first and second metal layers is selected so that the liquidus temperature of a mutual alloy formed therefrom is not less than the forming temperature of the thermoplastic polymer layer of the multilayer composite so that a solid metallic phase is maintained in intimate contact with at least a portion of the polymer layer at the forming temperature.

Kurfman et al., in U.S. Patent No. 4,115,619, teach that concentrated alloys are more easily extended than dilute alloys. An alloy is "concentrated" if it contains more than 20 percent by weight of alloy of minor alloy components. An alloy is "dilute" if it contains only minimal amounts of minor alloy components.

Although undiluted metal, especially indium may be used as the second metal layer, a concentrated binary, or two-component, alloy is generally more suitable for purposes of the present invention. Illustrative concentrated binary alloys are bismuth-cadmium alloys, bismuth-indium alloys, bismuth-lead alloys, bismuth-tin alloys, cadmium-indium alloys, cadmium-zinc alloys, cadmium-tin alloys, indium-tin alloys and lead-in alloys. The order in which a metal is shown for a particular concentrated binary alloy has no significance. Either metal may be the major component and they may be present in equal amounts.

Each of the aforementioned binary alloys has a eutectic temperature. At the eutectic temperature both metals of the alloy come out of solution together to form a eutectic composition.

Binary alloy compositions of greatest interest for use in the second metal layer are those which have a solidus temperature which is within five Kelvins of the eutectic temperature for that particular binary alloy.

As the binary alloy composition approaches the eutectic composition, the liquidus temperature will also approach the eutectic temperature.

The first metal layer is suitably prepared from a different composition of the same binary alloy as that used to prepare the second metal layer. By different composition, it is meant that the composition of the first metal layer is further removed from the eutectic composition of the binary alloy than the composition of the second metal layer. By way of illustration, a bismuth-cadmium alloy has a eutectic composition which contains 40 weight percent cadmium based on weight of alloy. Accordingly, a suitable second metal layer might contain 38 weight percent cadmium whereas a suitable first metal layer might contain only 25 weight percent cadmium, both percentages being based upon weight of alloy.

Kurfman et al., in U.S. Patent No. 4,115,619 cited hereinabove, teach that the liquidus temperature of an alloy may be raised by adding a minor amount of a high melting metal element to the alloy. Suitable high melting elements include copper, silver, nickel and manganese. As used herein, "minor amount" means from 5 to 20 percent by weight of alloy.

The alloy compositions for the first and second layers is selected so that a solid metallic phase is maintained in intimate contact with at least a portion of the polymer layer during forming operations. In order to ensure compliance with this limitation, the first metal layer should contain at least a minimum amount of the solid metallic phase. The minimum amount is an amount which is greater than that amount which is soluble in the solid or partially liquified metal alloy at the forming temperature of the polymer layer. Suitable results are also obtained when the first metal layer is completely solid.

The solid metallic phase may consist of one or more of the high melting elements noted hereinabove. Alternatively, the solid metallic phase may consist of an intermetallic compound. The solid metallic phase may also consist of an intermetallic compound and at least one of the metals from which the second metal layer is formed.

Suitable intermetallic compounds have incorporated therein at least one of said high melting elements and at least one of the metals from which the second metal layer is formed.

The multilayer composites of the present invention may be prepared by conventional methods and techniques, for making multilayer metal/organic polymer composites wherein the layers of the composites adhere to each other. These methods may be used either singly or in combination.

The first and second metal layers of the duplex alloy structure are suitably applied sequentially. That is, after the first metal layer is adhered to the thermoplastic polymer layer, the second metal layer is adhered to the first metal layer.

One method of depositing the first metal layer on the thermoplastic polymer layer is by the electroless process described by F. A. Lowenheim in "Metal Coatings of Plastics", Noyes Date Corporation, (1970), by Pinter, S. H. et al., *Plastics: Surface and Finish*, Daniel Davey & Company, Inc., 172—186 (1971) or in U.S. Patent No. 2,464,143.

A second method of depositing the first metal layer on the thermoplastic polymer layer is a vacuum deposition technique wherein the metal is vacuum evaporated and then deposited as a metal layer onto a polymer or a metal layer. *See,* William Goldie, *Metallic Coating of Plastics*, Volume I, Electrochemical Publications Limited, Chapter 12, (1968).

Other metallization techniques include sputter coating, as described in Chapter 13 of Goldie, *supra*, and electroplating and ion plating.

The second metal layer may be applied to the first metal layer either by the same process used to apply the first metal layer to the polymer layer or by a different process. For example, the vacuum deposition technique may be used to deposit both the first and second metal layers.

Deposition of both the first and the second metal layers may be accomplished in a single pass through a vacuum metallization chamber by using sequential exposure. "Sequential exposure", as used herein, means that vacuum deposition of the metal or alloy of the second metal layer onto the first metal layer is started after at least a major portion of the metal or alloy of the first metal layer has been vacuum deposited onto the polymer layer.

Sequential exposure may be accomplished by a number of arrangements. For example, two vacuum evaporation boats may be arranged in a spatial relationship such that a web of thermoplastic polymer passes over a first boat and then over a second boat. The metal or alloy of the first metal layer is fed to the first boat and the metal or alloy of the second layer is fed to the second boat.

The thickness of the first metal layer, although not particularly critical, preferably is such that it meets three criteria.

First, the first metal layer should be sufficiently thick to form a continuous film over the desired surface of the polymer layer. A continuous film is needed to meet end use requirements such as a highly-reflective surface, a high barrier to vapor transmission or electroconductivity.

Second, the first metal layer should have a thickness sufficient to allow the composite to undergo a cumulative surface dimensional change in area of at least 30 percent, beneficially from 50 to 300 percent, without rupturing either the metal layer or the polymer layer thereof.

Third, the first metal layer should be sufficiently thick to provide a suitable base upon which to deposit a thicker second layer.

The first metal layer suitably has a thickness less than that which inherently delaminates from the polymer layer. More specifically, the thickness of the first metal layer is beneficially from 0.005 to one micrometer. The thickness is desirably from 0.01 to 0.5 micrometer, and preferably from 0.03 to 0.3 micrometer. The thickness of the first metal layer is most preferably less than 0.1 micrometer if the metal or metal alloy of said first metal layer has a Young's Modulus in excess of 700,000 kg/cm$^2$ (10,000,000 lbs/in$^2$).

The second layer preferably is sufficiently thick to ensure that the multilayer composite has an optical density measurement, before elongation, of greater than 2.0, beneficially greater than 3.0 and desirably greater than 4.0.

After elongation of about 100 percent, the multilayer composite beneficially retains its pre-elongation optical density measurement. After elongation of about 300 percent, the multilayer composite suitably has an optical density measurement of not less than 2.0.

Stated differently, the second layer preferably has a thickness sufficient to ensure that the multi-layer composite has a visually and electrically continuous metal layer after deformation or extension with in the hereinabove stated limits.

When the duplex metal alloy has a thickness of less than about 0.002 inches (50 micrometers), it is desirable that the first metal layer has a thickness of from 50 to about 300 Angstroms (0.005 to 0.3 micrometers).

When a duplex metal alloy coating having a thickness of more than about 0.002 inches (50 micrometers) is desired, it has been found that two additional conditions should be met.

As a first condition the second metal layer should be applied, either as a liquid or as a liquid-solid solution which is predominantly liquid, to a first metal layer which is partially, but not wholly, liquid. Care in selecting metal compositions for the first and second metal layers is necessary to ensure that this condition is met.

As a second condition, the first metal layer should have a thickness which is relatively thin compared to that of the second metal layer. "Relatively thin", as used herein means that the first metal layer has a thickness which is less than that of the second metal layer but greater than 500 Angstroms (0.05 micrometers).

By complying with the foregoing conditions, a number of benefits are realized.

A first benefit is that the metal or alloy of the second metal layer almost spontaneously "wets out" onto the first metal layer. That is, little or no pressure need be applied to the metal of the second metal layer to cause it to spread in a generally uniform manner over the first metal layer.

A second benefit is that the metal or alloy of the second metal layer will generally conform to the pattern of deposition of the first metal layer. This has been found to be true irrespective of whether said pattern of deposition is continuous or discontinuous.

A third benefit is that mutual alloying which occurs because of interaction between liquid portions of the first and second metal layers enhances bonding between the first and second metal layers.

An alternative procedure for preparing a duplex metal alloy involves depositing the first metal layer on a first polymer layer and the second metal layer on a second polymer layer. The first metal layer and the second metal layer are then fusion bonded by application of heat and pressure. Careful selection of metal

**0 130 834**

layer composition and polymer layers is necessary to provide a strong bond between the metal layers without degrading or destroying either polymer layer.

In preparing a multilayer composite wherein the polymer layer comprises a relatively polar polymer, it is generally not necessary to pretreat the polymer layer prior to application of the first metal layer. Illustrative "polar" polymers are polycarbonate, polyester, polyvinyl halide or polyvinylidene halide, polyvinyl alcohol, and acrylic polymers. When the polymer layer comprises a relatively non-polar polymer pretreatment of a surface of the polymer layer to enhance bonding between the first metal layer and the polymer layer is desirable. Polystyrene and polyethylene are examples of "relatively non-polar" polymers.

A suitable pretreatment includes gas phase sulfonation as described in U.S. Patent No. 3,625,751 to Walles. Gas phase sulfonation is also described by Lindblom et al. in U.S. Patent No. 3,686,018. Other suitable pretreatments include corona discharge, flame treatment and liquid phase sulfonation.

As an alternative to pretreatment, the polymer layer may be coated with an adhesive. Adhesives commonly employed in bonding metal layers to relatively non-polar organic polymer layers may be used. Suitable adhesives include an ethylene/acrylic acid copolymer, and an ethylene/vinyl acetate copolymer.

While the metal layers may be applied to either or both sides of the polymer layer(s), it is generally sufficient to apply the metal layer to only one surface of the polymer layer. It is understood, however, that when a metal layer will be exposed in a final article, such exposed metal layer can be protected by coating it with an adherent material which will not corrode said metal layer.

Materials suitably employed as protective coatings for the metal layer include polycarbonates such as those derived from bisphenol-A and/or phenolphthalein; polyesters, such as polyethylene terephthalate; acrylic polymers, such as poly(methyl methacrylate); vinylidene chloride copolymers; polyepoxides; alkyd resins; and polyurethanes.

If a protective coating is to be applied over the metal layer prior to a forming operation, it is necessary to select a coating material which will not rupture during forming.

An exemplary method for overcoating the metal layer is described in U.S. Patent No. 3,916,048. A protective polymer in the form of a latex is applied to the metal layer and dried to form a continuous film at a temperature below the heat distortion point of the polymer layer. By following this technique it is possible to form the metal composite before or after application of the protective coating.

In cases wherein high barrier is desired, it will often be desirable to overcoat the metal layer with a barrier polymer. Suitable barrier polymers include vinylidene chloride copolymers and polyvinyl alcohol polymers. A barrier polymer overcoating is not necessary if the barrier polymer is to be used as the polymer layer of the multilayer composite.

A Wray Britton in *Package Engineering*, Vol. 24, February 1979 (42—43), proposes the use of optical density measurements as a standard measure for film metallization. "Optical density, also known as transmission density, is a measure of transparency of a material. Optical density is a logarithmic scale which quantifies the amount of light transmitted through a material. Optical density is equal to $Log_{10}$ 1/T or Log O or Log 100/Tr, where T=transparency, O=opacity, and Tr=percentage of light."

Britton details a method for determining optical density. "A transmission densitometer passes a beam of light through a test object. A photosensitive device measures the amount of light which passes through the test object. The measure of light transmitted vs. the light available for transmission provides an index. An electrical circuit converts the index to provide a digital readout of optical density."

Britton notes that as a "metallized film moves from transparent (optical density of less than 1.0) to virtually opaque (optical density of 4.0), the barrier properties [of the metallized film] improve." In other words, transmission of oxygen and water vapor through a metallized film decreases as optical density of the film increases.

The multilayer composite of the present invention may be formed to a desired shape by a conventional forming process, e.g., thermoforming or solid phase forming. Thermoforming is suitably carried out at temperatures of from about the second order transition temperature (Tg) of the polymer up to and including temperatures at or above the melting point of the polymer provided the polymer has sufficient melt strength to undergo the forming operation without rupturing.

Exemplary thermoforming processes include differential air pressure thermoforming, match dye thermoforming, vacuum forming, plug assist-vacuum forming, draw forming, impact forming, rubber pad forming, hydroforming, and drape molding.

Since most thermoplastic polymers preferably employed in the practice of this invention have melting points of less than 200° Centigrade (473 Kelvins), it is generally advantageous to thermoform the composite at a temperature from 25° Centigrade (298 Kelvins) to 200° Centigrade (473 Kelvins), desirably from 90° Centigrade (363 Kelvins) to 180° Centigrade (453 Kelvins).

The multilayer composite of the present invention may be used, after forming, without further fabrication. Further fabrication is unnecessary for most packaging and electroconductive applications.

In packaging applications the formed multilayer composite can be used as tubs or similar deep drawn containers for various oxygen sensitive foods as described herein, or as packaging films.

In electroconductive applications, the formed multilayer composite can be used as printed circuit stock for electrical and electronic equipment, and the like.

In addition to the foregoing uses, a formed multilayer composite generally defining a cavity is suitably reinforced by filling the cavity with a reinforcing material. Alternatively, a reinforcing material may be

8

**0 130 834**

adhered to the surface of the composite outermost from the cavity or concave shape as in the case of the reflector for an automobile headlamp.

The type of reinforcing material employed is not particularly critical. For example, the reinforcing material may be metal such as steel, wood, stone, concrete and polymeric. Polymeric reinforcing materials, either natural or synthetic in origin, are suitable for use in conjunction with the formed multilayer composites of the present invention. Polymeric reinforcing materials may be formed or nonfoamed, rigid or flexible, elastomeric or non-elastomeric. Polymeric reinforcing materials may also be pure (non-filled) or filled with pigments, stabilizers, reinforcing fibers such as glass fibers, and fillers. In addition, the polymeric reinforcing materials may contain crosslinking components.

Suitable rigid polymeric materials include polyurethane, polystyrene, epoxy polymers, polyvinyl chloride, vinylac resin, silicone polymers, cellulosic polymers, acrylic polymers, saturated polyesters and unsaturated polyesters, and asphalt. Of these materials with polyurethanes are generally preferred. Rigid polymers and rigid polymer foams are useful in the fabrication of articles which are not exposed to significant amounts of impact.

In the production of articles such as bumpers and external trim for automobiles and other vehicles of transportation that are exposed to impact, it is desirable to employ an elastomeric polymer foam as the reinforcing material. Examples of such elastomeric polymers include elastomeric polyurethanes; rubbery styrene/butadiene copolymers; polybutadiene rubber; natural rubber; ethylene polymers, particularly ethylene/propylene copolymer rubber; and chlorinated polyethylene.

Blends of two or more of the aforementioned reinforcing materials may also be used. Such elastomeric polymers, whether solid or foamed, and methods for their preparation are well-known to those skilled in the art and therefore will not be discussed in greater detail here.

The reinforcing material is readily cast onto the shaped multilayered composite by any of a wide variety of casting techniques. For example, a reinforcing material may be applied by foamed-in-place or pour-in-place techniques as well as spray applications, slush castings or rotational casting application. Exemplary methods are described in more detail in U..S. Patent No. 3,414,456. It is desirable that conditions of the casting technique employed be such that the formed composite does not deform during casting, foaming and/or curing steps which may be employed. However, if such deforming conditions are employed at this time, a support mold for the thermoformed composite is required.

The following Examples are given to illustrate some specific embodiments of the invention and should not be construed as limiting the scope thereof. In the following Examples, all parts and percentages are by weight unless otherwise indicated.

Example 1

Two stage metallization of a polycarbonate substrate

A rectangular section 28 cm×51 cm (11 inches by 20 inches) of polycarbonate film having a thickness of 0.013 cm (0.005 inch) was used as a metallization substrate. The polycarbonate film was derived from bisphenol A and phosgene.

A vacuumizable bell jar having disposed therein a resistance-heated vacuum evaporation boat (crucible) and a wire feeding mechanism was used as a metallization apparatus.

The evaporation boat was machined from graphite and has an evaporation cavity measuring 5.1 cm (2 inches) in length by 1.3 cm (1/2 inch) in width by 0.8 cm (5/16 inch) in depth. The evaporation boat was electrically attached to a power supply capable of delivering 600 amperes at 5 volts to establish a resistance-heating element.

The polycarbonate film was configured to the shape of a partial cylinder having a radius of about 25.4 cm (10 inches) by taping the film to a rigid metal sheet of that configuration. The configured film was positioned in the bell jar above the evaporation boat such that the axis of the partial cylinder was aligned with the boat in order to achieve a generally uniform thickness of metal to be deposited on the film.

The wire feeding mechanism was positioned such that a controlled amount of metal wire could be dispensed therefrom into the evaporation cavity of the evaporation boat.

Two one-hundredths (2/100) of a gram of metallic copper were placed in the evaporation cavity for a first stage metallization. The bell jar was then closed and evacuated to a pressure of about $1 \times 10^{-4}$ torr (1.3 cPa).

Electrical current to the filament was turned on and adjusted to a nominal current of 450 amps. The electrical current was sufficient to raise the temperature of the evaporation boat to about 1000° Centrigrade and to evaporate the metallic copper contained therein in about 30 seconds.

After the copper was evaporated, the wire feeding mechanism was actuated to introduce 0.5 grams of a binary eutectic wire into the evaporation cavity for a second stage metallization. The rate of feeding of wire and the electrical current were adjusted so that the rate of melting of the metal was approximately equal to the rate of evaporation thereof.

The binary eutectic wire was an alloy of 57 percent by weight of bismuth and 43 percent by weight of tin, both percentages being based on weight of alloy.

After all the eutectic wire had evaporated, the current was turned off. The bell jar was subsequently opened to atmospheric pressure.

Final metal thickness was about 3000 Angstroms (0.3 micrometers) as determined by measuring the

9

surface electrical resistance of the metal deposit and calculating thickness based on the bulk electrical resistance of the tin-bismuth alloy. The tin-bismuth alloy wire bulk resistance measurement was 0.06 ohms/foot (0.18 ohms/m) for a 0.16 cm (1/16) diameter wire.

Example 2
Use of a copper-tin alloy in the first stage of a two stage metallization as in Example 1
Using the apparatus and procedures of Example 1 a piece of polycarbonate film having the same size and composition as that of Example 1 was metallized in the first stage with 0.20 grams of a metal alloy. The metal alloy was composed of 0.03 grams of copper and 0.17 grams of tin. As in Example 1, the second stage metallization was conducted with 0.5 grams of the binary (bismuth/tin) eutectic wire. Final metal thickness, determined as in Example 1, was about 4000 Angstroms (0.4 micrometers.

Example 3
Two stage metallization with a thicker polycarbonate film, and an increased amount of binary eutectic wire
Using the apparatus and procedures of Example 1, a piece of polycarbonate film similar in every respect to that of Example 1 except that the thickness was 0.038 cm (0.015 inch) rather than 0.013 cm (0.005 inch) was metallized. In the first stage metallization, 0.02 grams of copper were placed in the evaporation cavity. Using the procedures detailed by K. L. Chopra, in *Thin Film Phenomena*, McGraw-Hill Book Company, 1969, at pages 91—92, a quartz-crystal monitor (also known as a crystal thickness monitor), was used to monitor rates of deposition of metal onto a metallization substrate. Rates of deposition were then converted to metal layer thickness.
Thickness of the metal layer after the first stage metallization was about 100 Angstroms (0.01 micrometers). In the second stage metallization, conducted in the same manner as Example 1, 1.5 grams of the binary (bismuth/tin) eutectic were added to the evaporation cavity. Final metal thickness was about 9000 Angstroms (0.9 micrometers).

Comparative example A
Single stage metallization
For purposes of comparison, a similar piece of polycarbonate film was metallized in the manner hereinbefore described except that the first stage was omitted. In other words, the evaporation cavity was empty until 1.5 grams of the binary eutectic wire was added thereto as in Examples 1 and 2. Final metal thickness, determined as in Example 1, was about 8900 Angstroms (0.89 micrometers).

Comparative example B
Single stage metallization using a ternary metal alloy
For purposes of comparison a piece of polycarbonate film similar to that of Example 1 was metallized in the manner hereinbefore described except that the second stage was omitted. One-half gram of a ternary alloy was substituted for the metallic copper used in the first stage of Example 1. The ternary alloy was composed of 54 weight percent bismuth, 41 weight percent tin and 5 weight percent copper, all percentages being based upon weight of alloy. Electrical current was adjusted to result in evaporation of the alloy in about 30 seconds. Final metal thickness, determined as in Example 1, was about 3000 Angstroms (0.3 micrometers).

Comparative example C
Metallization of polycarbonate film using two evaporation boats operated in sequence
The apparatus of Example 1 was modified by replacing the wire feeding mechanism with a second evaporation boat. The second evaporation boat was identical to the evaporation boat described in Example 1 (first evaporation boat).
For purposes of comparison, twenty-three one-hundreths (23/100) of a gram of bismuth were placed into the evaporation cavity of the first boat. Forty-seven one-hundredths (47/100) of a gram of a tin-copper alloy were placed into the evaporation cavity of the second boat. The alloy was composed of 88 weight percent tin and 12 weight percent copper, both percentages being based on weight of alloy.
The apparatus was closed and evacuated as in Example 1. Electrical current to the first boat was turned on and adjusted to effect evaporation of the bismuth in about 1-1/2 minutes. The crystal thickness monitor showed that a coating of bismuth having a thickness of about 800 Angstroms (0.08 micrometers) was deposited on the polycarbonate film (80 micrograms/square centimeter).
After turning off the electrical current to the first boat, the current to the second boat was turned on and adjusted to effect evaporation of the alloy in about 4 minutes. After the alloy had evaporated, the current to the second boat was turned off. The crystal thickness monitor showed that a coating of about 2200 Angstroms (0.22 micrometers) of the alloy was deposited over the coating of bismuth (162.9 micrograms per square centimeter).
Final composition of the metal deposited on the polycarbonate film was about 32 weight percent bismuth, 60 weight percent tin and 8 weight percent copper. Final composition was calculated based upon weight of bismuth accumulated by the quartz crystal monitor and upon weight of tin-copper alloy subsequently accumulated by the monitor.

Sample extension

Metallized film samples were prepared for extension by cutting 1.27 cm (1/2 inch) ribbons (2.54 cm for draws over 200 percent) at least 15.24 cm (6 inches) long from the film stock prepared described in Examples 1—3 and Comparative Examples A—C.

The center 2.54 cm (1 inch) of length of the tested ribbon was held securely with the polymer face against a 2.54 cm (one inch) wide copper block. The copper block was controlled at a given test temperature by a thermostat-equipped electrical resistance heating element.

For 0.13 mm (5-mil) polycarbonate samples, a 3 second sample contact time was allowed for temperature equilibration. Load was then applied to the ribbon ends to extend the sample to final length at a rate of lengthening of about 7.62 cm/sec (3 inches/second).

Ribbon thickness was determined before and after extension, by micrometer measurement. the increase in area was determined, assuming constant sample volume, from the relationship Volume=thickness×area. The increase in area divided by the initial area and expressed as a percentage was taken as the percentage area extension.

$$\text{Percent extension} = 100\left[\frac{\text{final area} - \text{initial area}}{\text{initial area}}\right]$$

$$= 100\left[\frac{\text{initial thickness}}{\text{final thickness}} - 1\right]$$

Optical density measurements, in accordance with Britton's method hereinabove described, were made on each of the metallized films prepared in the preceding examples and comparative examples both before and after the metallized films were extended at 171°F (340°F).

Optical density values before and after extension and percentages of extension are summarized in a table which follows.

### Table of Optical Density Measurements

| Example/ Comparative example number | Optical density measurements | | Percent extension |
|---|---|---|---|
| | Before extension | After extension | |
| 1 | >4 | >4 | 100 |
| 2 | >4 | 2 | 100 |
| 3 | >4 | >4 | 100 |
| | | 2 | 300 |
| A | >4 | <1 | 100 |
| B | >4 | <1 | 100 |
| C | >4 | <1 | 100 |

A review of the data set forth in the table is instructive. The temperature chosen for extension 171°C (340°F) was 32°C (58°F) greater than the melting point of the binary eutectic wire 139°C (282°F). The polycarbonate had a second order transition temperature at 149°C (300°F). In spite of this, the metal layers of Examples 1—3 retained their integrity and their high optical density measurements.

As hereinabove noted, an optical density measurement of about 4.0 indicates that a metallized film has a barrier to oxygen and water vapor which is much greater than that of a metallized film having an optical density measurement of about 1.0.

Comparative examples C clearly demonstrates that an initial metal layer of bismuth, which has a much higher vapor pressure at a given temperature than either tin or copper, produces less than satisfactory results.

Similar results are obtained with other metals hereinbefore listed as well as with other suitable thermoplastic organic polymer substrates also as hereinbefore listed. As hereinabove noted, a pretreatment of the polymer may be required when using substrates other than polycarbonate, to provide adequate adhesion at the metal layer-polymer layer interface.

# 0 130 834

**Claims**

1. A duplex metal/organic polymer multilayer composite structure comprising at least one normally solid, formable thermoplastic polymer layer and a first normally solid metal layer intimately adhered to a planar surface of the polymer layer, characterised in that

the first metal layer is formed of an alloy or of a metal selected from copper, silver, nickel and manganese,

a second normally solid metal layer formed of an alloy or of a metal is intimately adhered to the first metal layer, and

the relationship between the materials of the first and second layers is that a solid metallic phase is maintained in intimate contact with at least a portion of the polymer layer at the forming temperature and either:—

(a) the first metal layer is formed of an alloy melting at a temperature between 85 and 150 percent of the forming temperature of the polymer layer and the second metal layer is formed of an alloy or metal melting at a temperature below the melting temperature of said alloy of the first metal layer, or

(b) the first and second metal layers when heated together at a temperature (1), when the first metal layer is formed of an alloy, between the solidus temperature and the liquidus temperature of the first metal layer and greater than the liquidus temperature of the second layer or (2), when the first metal layer is formed of one metal, between the forming temperature and degradation temperature of the polymer layer form a segregated alloy melting at a temperature between 80 and 135 percent of the forming temperature of the polymer layer,

all temperatures being in Kelvins.

2. A composite structure as claimed in Claim 1, wherein the thickness of the first metal layer is from 0.005 to 1 micrometer.

3. A composite structure as claimed in Claim 2, wherein the thickness of the first metal layer is from 0.01 to 0.5 micrometers.

4. A composite structure as claimed in any one of the preceding Claims, wherein the first metal layer is formed from an alloy melting at a temperature (in Kelvins) between 85 and 150 percent of the forming temperature (in Kelvins) of the thermoplastic polymer layer and the second metal layer is formed from a metal or an alloy melting at a temperature below the melting temperature of said alloy of the first metal layer.

5. A composite structure as claimed in any one of the preceding Claims, wherein the alloy of the first metal layer has a solidus temperature (in Kelvins) between 85 and 98 percent of the forming temperature (Kelvins) of the thermoplastic polymer layer and a liquidus temperature (Kelvins) between 102 and 150 percent of the forming temperature (Kelvins) of the thermoplastic polymer layer.

6. A composite structure as claimed in any one of the preceding Claims wherein the alloy of the first metal layer is an alloy containing two or more metals selected from cadmium, indium, tin, antimony, lead, bismuth, and zinc.

7. A composite structure as claimed in Claim 6, wherein the alloy also contains copper in an amount of from 5 to 40 percent by weight of alloy.

8. A composite structure as claimed in Claim 6, wherein the alloy also contains silver in an amount of from 5 to 75 percent by weight of alloy.

9. A composite structure as claimed in any one of the preceding Claims, wherein the second metal layer is formed from an alloy containing two or more metals selected from cadmium, indium, tin, antimony, lead, bismuth and zinc.

10. A composite structure as claimed in Claim 9, wherein the second metal layer has a solidus temperature, a liquidus temperature and a eutectic temperature.

11. A composite strucutre as claimed in Claim 10, wherein the second metal layer is formed from a binary alloy selected from tin-lead, lead-bismuth, indium-tin, bismuth-tin, bismuth-cadmium, bismuth-indium, cadmium-indium, cadmium-zinc, and cadmium-tin and having a solidus temperature which is within 5 Kelvins of the eutectic temperature.

12. A composite structure as claimed in any one of the preceding Claims, wherein the thermoplastic polymer layer is selected from polycarbonates, polyesters, acrylic resins, monovinylidene aromatic polymers, vinyl halide polymers, vinylidene halide polymers, and polyacetals.

13. A composite structure as claimed in any one of the preceding Claims, wherein the first and second metal layers are in such a proportional relationship with respect to each other that, when taken together and heated to a temperature, (1), when the first metal layer is formed of an alloy, between the solidus temperature and the liquidus temperature of the first metal layer and greater than the liquidus temperature of the second metal layer, or (2), when the first metal layer is formed of one metal, between the forming temperature and degradation temperature of the polymer layer, they form segregated metal alloy having a melting temperature (in Kelvins) between 80 to 135 percent of the forming temperature (in Kelvins) of the thermoplastic polymer.

14. A composite structure as claimed in Claim 13, wherein the metal of the first metal layer has a solidus temperature (in Kelvins) between 85 to 89 percent of the forming temperature (in Kelvins) of the thermoplastic polymer and a liquidus temperature (in Kelvins) between 102 and 150 percent of the forming

12

temperature (in Kelvins) of the thermoplastic polymer, and the second metal layer has a liquidus temperature less than the liquidus temperature of the first metal layer.

15. A composite structure as claimed in Claim 13 or Claim 14, wherein the first metal layer is of such a composition and proportion relative to the second metal layer that intermetallic phases formed by interaction between the metal layers do not increase the liquidus temperature (in Kelvins) of the second metal layer beyond 135 percent of the forming temperature (in Kelvins) of the thermoplastic polymer layer.

16. A composite structure as claimed in Claim 10, wherein the first metal layer is of such a composition and proportion relative to the second metal layer that intermetallic phases formed by interaction between the metals layers do not increase the liquidus temperature of the second metal layer by more than 30° Kelvins above the eutectic temperature of the second metal layer.

17. A composite structure as claimed in Claim 16, wherein the metal of the second metal layer is at least 75 weight percent liquid, based on weight of said second metal layer, at a temperature which is not more than 25° Kelvins above the eutectic temperature of the second metal layer.

18. A composite structure as claimed in Claim 17, wherein the metal of the second metal layer is an alloy which comprises at least 30 weight percent tin and at least 40 weight percent bismuth, both percentages being based upon weight of alloy.

19. A composite structure as claimed in Claim 1, wherein the first metal layer is formed from a metal selected from copper, silver, nickel and manganese; and the second metal layer is formed from a metal or an alloy, said second metal layer being in such a proportional relationship with respect to the first metal layer that the two metal layers, when taken together and heated to the forming temperature of the polymer layer, comprise a segregated alloy of at least two metals, the segregated alloy having a melting temperature (in Kelvins) between 80 and 135 percent of the forming temperature (in Kelvins) of the polymer layer.

20. A composite structure as claimed in Claim 19, wherein the first metal layer has a thickness of from 0.005 to 0.03 micrometers (50 to 300 Angstroms).

21. A composite structure as claimed in Claim 1, having one or more of the following features:—

(a) the thermoplastic polymer is a polycarbonate, preferably derived from a bis(4-hydroxyphenol) alkylidene or a combination of a bis(4-hydroxyphenol) alkylidene with a phenolphthalein type diol;

(b) the thermoplastic polymer layer has a thickness the range of from 2 to 10,000 micrometers, preferably from 10 to 500 micrometers;

(c) the alloy of the first metal layer has a liquidus temperature (in Kelvins) between 102 and 150 percent of the forming temperature (in Kelvins) of the thermoplastic polymer;

(d) the second metal layer is formed of a binary alloy having a solidus temperature within 5° Kelvins of the eutectic temperature of said binary alloy:

(e) the first metal layer is formed of a different composition of the same binary alloy as that of the second metal layer;

(f) the thickness of the first metal layer is 0.03 to 0.3 micrometers;

(g) the metal or alloy of the first metal layer has a Young's Modulus above 700,000 kg/cm$^2$ and the thickness of said layer is less than 0.1 micrometer.

22. A method of preparing a duplex metal/organic polymer multilayer composite structure as claimed in Claim 1, said method comprising providing at least one normally solid, formable thermoplastic polymer layer having intimately adhered to a planar surfce of the polymer layer a first metal layer formed of an alloy or of a metal selected from copper, silver, nickel and manganese, and intimately adhering to the first metal layer a second normally solid metal layer formed of an alloy or of a metal, wherein the relationship between the materials of the first and second layers is that a solid metallic phase is maintained in intimate contact with at least a portion of the polymer layer at the forming temperature and either:—

(a) the first metal layer is formed of an alloy melting at a temperature between 85 and 150 percent of the forming temperature of the polymer layer and the second metal layer is formed of an alloy or metal melting at a temperature below the melting temperature of said alloy of the first metal layer, or

(b) the first and second metal layers when heated together at a temperature (1), when the first metal layer is formed of an alloy, between the solidus temperature and the liquidus temperature of the first metal layer and greater than the liquidus temperature of the second metal layer or (2), when the first metal layer is formed of one metal, between the forming temperature and degradation temperature of the polymer layer form a segregated alloy melting at a temperature between 80 and 135 percent of the forming temperature of the polymer layer, all temperatures being in Kelvins.

23. A method as claimed in Claim 22, wherein the first metal layer is formed from an alloy melting at a temperature (in Kelvins) between 85 and 150 percent of the forming temperature (in Kelvins) of the thermoplastic polymer layer, the second metal layer is formed from a metal or an alloy melting at a temperature below the melting temperature of said alloy of the first metal layer.

24. A method as claimed in Claim 22 or Claim 23, wherein the second metal layer is applied to the first metal layer while the metal of the second metal layer is at a temperature greater than its liquidus temperature and between the solidus temperature and the liquidus temperature of the first metal layer.

25. A method as claimed in Claim 22 or Claim 23, wherein vacuum deposition is used to adhere the first metal layer to the polymer layer and to adhere the second metal layer to the first metal layer, deposition of the second metal layer onto the first metal layer being started after at least a major portion of the alloy of the first metal layer has been vacuum deposited onto the polymer layer.

26. A method as claimed in any one of Claims 22 to 25, wherein the first metal layer and/or second metal layer and/or polymer layer is as defined in any one of Claims 5 to 12.

27. A method as claimed in any one of Claims 22 to 26, wherein the metal of the first metal layer has a solidus temperature (in Kelvins) between 85 and 98 percent of the forming temperature (in Kelvins) of the thermoplastic polymer and a liquidus temperature (in Kelvins) between 102 and 150 percent of the forming temperature (in Kelvins) of the thermoplastic polymer, and the metal of the second metal layer has a liquidus temperature below the liquidus temperature of the metal alloy of the first metal layer.

28. A method as claimed in Claim 22, wherein the first metal layer is formed from a metal selected from copper, silver, nickel and manganese; and the second metal layer is formed from a metal or an alloy, said second metal layer being in such a proportional relationship with respect to the first metal layer that the two metal layers, when taken together and heated to the forming temperature of the polymer layer, form a segregated alloy, the segregated alloy having a melting temperature (in Kelvins) between 80 and 135 percent of the forming temperature (in Kelvins) of the polymer layer.

29. A method as claimed in Claim 28, wherein the first metal layer has a thickness of from 0.005 to 0.02 micrometers (50 to 300 Angstroms).

30. A method as claimed in Claim 22, wherein the first metal layer is formed from a normally solid alloy and is in such a proportional relationship with respect to the second metal layer that the two metal layers, when taken together and heated to a specific temperature comprise a segregated alloy, the specific temperature being (1) between the solidus temperature and the liquidus temperature of the first metal layer and (2) greater than the liquidus temperature of the second metal layer, the segregated metal alloy having a melting temperature (in Kelvins) between 80 and 135 percent of the forming temperature (in Kelvins) of the thermoplastic polymer.

**Patentansprüche**

1. Duplexmetall/organisches Polymer-Vielschichtverbundstruktur, umfassend mindestens eine normalerweise feste, formbare thermoplastische Polymerschicht und eine erste normal feste Metallschicht, die eng verbunden ist mit einem planaren Oberfläche der Polymerschicht, dadurch gekennzeichnet, daß die erste Metallschicht gebildet wird aus einer Legierung oder aus einem Metall, ausgewählt aus Kupfer, Silber, Nickel und Mangan, eine zweite normalerwise feste Metallschicht, die aus einer Legierung oder einem Metall gebildet wird, eng an der ersten Metallschicht anliegt und daß die Beziehung zwischen den Materialien der ersten und der zweiten Schichten so ist, daß eine feste metallische Phase in engem Kontakt mit mindestens einem Teil der Polymerschicht bei der Bildungstemperatur aufrechterhalten wird und entweder:

(a) die erste Metallschicht aus einer Legierung gebildet wird, die bei einer Temperatur zwischen 85 und 150% der Bildungstemperatur der Polymerschicht schmilzt und die zweite Metallschicht aus einer Legierung oder einem Metall gebildet wird, die bei einer Temperatur unterhalb der Schmelztemperatur der Legierung der ersten Metallschicht schmelzen oder

(b) die ersten und zweiten Metallschichten, wenn sie zusammen erhitzt werden bie einer Temperatur (1), die wenn die erste Metallschicht aus einer Legierung gebildet wird, zwischen der Solidustemperatur und der Liquidustemperatur der ersten Metallschicht liegt und größer als die Liquidustemperatur der zweiten Metallschicht ist oder (2) wenn die ersten Metallschicht aus einem Metall gebildet wird, zwischen der Bildungstemperatur und der Zersetzungstemperatur der Polymerschicht ist, eine ausgeschiedene Legierung bilden, die bei einer Temperatur zwischen 80 und 135% der Bildungstemperatur der Polymerschicht schmilzt, wobei alle Temperaturen in Kelvin-Graden sind.

2. Verbundstruktur nach Anspruch 1, worin die Dicke der ersten Metallschicht 0,005 bis 1 µm ist.

3. Verbundstruktur nach Anspruch 2, worin die Dicke der ersten Metallschicht 0,01 bis 0,5 µm ist.

4. Verbundstruktur nach einem der vorhergehenden Ansprüche, worin die erste Metallschicht aus einer Legierung gebildet wird, die bei einer Temperatur (in °Kelvin) zwischen 85 und 150% der Bildungstemperatur (in Kelvin) der thermoplastischen Polymerschicht schmilzt und worin die zweite Metallschicht aus einem Metall oder einer Legierung gebildet wird, die bei einer Temperatur unterhalb der Schmelztemperatur der Legierung der ersten Metallschicht schmelzen.

5. Verbundstruktur nach einem der vorhergehenden Ansprüche, worin die Legierung der ersten Metallschicht eine Solidustemperatur (in Kelvin) zwischen 85 und 98% der Bildungstemperatur (Kelvin) der thermoplastischen Polymerschicht und eine Liquidustemperatur (Kelvin) zwischen 102 und 150% der Bildungstemperatur (Kelvin) der thermoplastischen Polymerschicht hat.

6. Verbundstruktur nach einem der vorhergehenden Ansprüche, worin die Legierung der ersten Metallschicht eine Legierung ist, die zwei oder mehr Metalle, ausgewählt aus Cadmium, Indium, Zinn, Antimon, Blei, Wismuth und Zink enthält.

7. Verbundstrutur nach Anspruch 6, worin die Legierung auch Kupfer in einer Menge von 5 bis 40 Gew.-% der Legierung enthält.

8. Verbundstruktur nach Anspruch 6, worin die Legierung auch Silber in einer Menge von 5 bis 75 Gew.-% der Legierung enthält.

14

9. Verbundstruktur nach einem der vorhergehenden Ansprüche, worin die zweite Metallschicht gebildet wird aus einer Legierung, die zwei oder mehr Metalle ausgewählt aus Cadmium, Indium, Zinn, Antimon, Blei, Wismuth und Zink enthält.

10. Verbundstruktur nach Anspruch 9, worin die zweite Metallschicht eine Solidustemperatur, eine Liquidustemperatur und ein Eutektikum hat.

11. Verbundstruktur nach Anspruch 10, worin die zweite Metallschicht gebildet wird aus einer binären Legierung, ausgewählt aus Zinn-Blei, Blei-Wismuth, Indium-Zinn, Wismuth-Zinn, Wismuth-Cadmium, Wismuth-Indium, Cadmium-Indium, Cadmium-Zink und Cadmium-Zinn und eine Solidustemperatur hat die innerhalb von 5 °Kelvin der Eutektikumtemperatur liegt.

12. Verbundstruktur nach einem der vorhergehenden Ansprüche, worin die thermoplastische Polymerschicht ausgewählt ist aus Polycarbonaten, Polyestern, Acrylharzen, Monovinyliden-aromatischen Polymeren, Vinylhalogenidpolymeren, Vinylidenhalogenidpolymeren und Polyacetalen.

13. Verbundstruktur nach einem der vorhergehende Ansprüche, worin die erste und zweite Metallschicht in einem solchen proportionalen Verhältnis zueinander sind, daß sie, wenn sie zusammengenommen werden und auf eine Temperatur erhitzt werden, die (1) wenn die erste Metallschicht aus einer Legierung gebildet wird, zwischen der Solidustemperatur und der Liquidustemperatur der ersten Metallschicht liegt und höher als die Liquidustemperatur der zweiten Metallschicht ist oder (2) wenn die erste Metallschicht aus einem Metall gebildet wird, zwischen der Bildungstemperatur und der Zersetzungstemperatur der Polymerschicht liegt, eine abgeschiedene Metallegierung bilden, die eine Schmelztemperatur (in Kelvin) zwischen 80 und 135% der Bildungstemperatur (in Kelvin) des thermoplastischen Polymers hat.

14. Verbundstruktur nach Anspruch 13, worin das Metall der ersten Metallschicht eine Solidustemperatur (in Kelvin) zwischen 85 und 98% der Bildungstemperatur (in Kelvin) des thermoplastischen Polymers und eine Liquidustemperatur (in Kelvin) zwischen 102 und 150% der Bildungstemperatur (in Kelvin) des thermoplastischen Polymers hat und daß die zweite Metallschicht eine Liquidustemperatur hat, die geringer ist als die Liquidustemperatur der ersten Metallschicht.

15. Verbundstruktur nach Anspruch 13 oder 14, worin die erste Metallschicht eine solche Zusammensetzung und ein solches Mengenverhältnis, bezogen auf die zweite Metallschicht hat, daß intermetallische Phasen, die durch Wechselwirkung zwischen den Metallschichten gebildet werden, nicht die Liquidustemperatur (in Kelvin) der zweiten Metallschicht über 135% der Bildungstemperatur (in Kelvin) der thermoplastischen Polymerschicht erhöhen.

16. Verbundstruktur nach Anspruch 10, worin die erste Metallschicht eine solche Zusammensetzung und ein solches Mengenverhältnis bezüglich der zweiten Metallschicht hat, daß die durch Wechselwirkung zwischen den Metallschichten gebildeten intermetallischen Phasen die Liquidustemperatur der zweiten Metallschicht nicht um mehr als 30°Kelvin über die Eutektikumtemperatur der zweiten Metallschicht erhöhen.

17. Verbundstruktur nach Anspruch 16, worin das Metall der zweiten Metallschicht mindestens 75% flüssig ist, bezogen auf das Gewicht der zweiten Metallschicht, bei einer Temperatur, die nicht mehr als 25° Kelvin oberhalb der Eutektikumtemperatur der zweiten Metallschicht liegt.

18. Verbundstruktur nach Anspruch 17, worin das Metall der zweiten Metallschicht eine Legierung ist, die mindestens 30 Gew.-% Zinn und mindestens 40 Gew.-% Wismuth umfaßt, wobei beide Prozentangaben bezogen sind auf das Gewicht der Legierung.

19. Verbundstruktur nach Anspruch 1, worin die erste Metallschicht aus einem Metall, ausgewählt aus Kupfer, Silber, Nickel und Mangan gebildet wird und die zweite Metallschicht gebildet wird aus einem Metall oder einer Legierung, wobei die zweite Metallschicht in einem solchen proportionalen Verhältnis bezüglich der ersten Metallischicht ist, daß die zwei Metallschichten, wenn sie zusammengenommen werden und auf die Bildungstemperatur der Polymerschicht erhitzt werden, eine abgeschiedene Legierung mindestens zweier Metalle umfassen, wobei die abgeschiedene Legierung eine Schmelztemperatur (in Kelvin) zwischen 80 und 135% der Bildungstemperatur (in Kelvin) der Polymerschicht hat.

20. Verbundstruktur nach Anspruch 19, worin die erste Metallschicht eine Dicke von 0,005 bis 0,03 µm (50 bis 300Å) hat.

21. Verbundstruktur nach Anspruch 1, die eines oder mehrere der folgenden Merkmale aufweist:

(a) das thermoplastische Polymer ist ein Polycarbonat, das sich vorzugsweise von einem Bis(4-hydroxyphenol)-alkyliden oder einer Kombination aus einem Bis(4-hydroxyphenol)-alkyliden mit einem phenolphthaleinartigen Diol ableitet;

(b) die thermoplastische Polymerschicht hat eine Dicke im Bereich von 2 bis 10.000 µm, vorzugsweise 10 bis 500 µm;

(c) die Legierung der ersten Metallschicht hat eine Liquidustemperatur (in Kelvin) zwischen 102 und 150% der Bildungstemperatur (in Kelvin) des thermoplastischen Polymers;

(d) die zweite Metallschicht wird von einer binären Legierung mit einer Solidustemperatur im Bereich von 5°Kelvin der Eutektikumtemperatur der binären Legierung gebildet;

(e) die erste Metalischicht wird aus einer anderen Zusammensetzung derselben binären Legierung wie die der zweiten Metallschicht gebildet;

(f) die Dicke der ersten Metallschicht beträgt 0,03 bis 0,3 µm;

(g) das Metall oder die Legierung der ersten Metallschicht hat ein Young's Modul über 700.000 kg/cm² und die Dicke der Schicht ist geringer als 0,1 µm.

22. Verfahren zur Herstellung einer Duplexmetall/organisches Polymermultischichtverbundstruktur nach Anspruch 1, wobei das Verfahren daraus besteht, mindestens eine normalerweise feste, formbare thermoplastische Polymerschicht zu schaffen, die an einer planaren Oberfläche der Polymerschicht in engem Kontakt steht mit einer ersten Metallschicht, die aus einer Legierung oder aus einem Metall gebildet wird, ausgewählt aus Kupfer, Silber, Nickel und Mangan und wobei die erste Metallschicht mit einer zweiten normalerweise festen Metallschicht in engem Kontakt steht, die aus einer Legierung oder einem Metall gebildet wird, wobei das Verhältnis zwischen den Materialien der ersten und der zweiten Schichten so ist, daß eine feste metallische Phase in engem Kontakt mit mindestens einem Teil der Polymerschicht bei der Bildungstemperatur gehalten wird und wobei entweder:

(a) die erste Metallschicht aus einer Legierung, die bei einer Temperatur zwischen 85 und 150% der Bildungstemperatur der Polymerschicht schmilzt und die zweite Metallschicht aus einer Legierung oder einem Metall, die bei einer Temperatur unterhalb der Schmelztemperatur der Legierung der ersten Metallschicht schmelzen, gebildet wird oder

(b) die ersten und zweiten Metallschichten, wenn sie zusammen erhitzt werden, bei einer Temperatur, die (1) wenn die erste Metallschicht aus einer Legierung gebildet wird, zwischen der Solidustemperatur und der Liquidustemperatur der ersten Metallschicht liegt und höher als die Liquidustemperatur der zweiten Metallschicht ist oder (2) wenn die erste Metallschicht aus einem Metall gebildet wird, zwischen der Bildungstemperatur und der Zersetzungstemperatur der Polymerschicht liegt, eine abgeschiedene Legierung bilden, die bei einer Temperatur zwischen 80 und 135% der Bildungstemperatur der Polymerschicht schmilzt, wobei alle Temperaturen in Kelvin angegeben sind.

23. Verfahren nach Anspruch 22, worin die erste Metallschicht aus einer Legierung gebildet wird, die bei einer Temperatur (in Kelvin) zwischen 85 und 150% der Bildungstemperatur (in Kelvin) der thermoplastischen Polymerschicht schmilzt, und worin die zweite Metallschicht aus einem Metall oder einer Legierung gebildet wird, die bei einer Temperatur unterhalb der Schmelztemperatur der Legierung der ersten Metallschicht schmelzen.

24. Verfahren nach Anspruch 22 oder 23, worin die zweite Metallschicht auf die ersten Metallschicht aufgetragen wird, während das Metall der zweiten Metallschicht eine Temperatur hat, die größer ist als ihre Liquidustemperatur und zwischen der Solidustemperatur und der Liquidustemperatur der ersten Metallschicht liegt.

25. Verfahren nach Anspruch 22 oder 23, worin eine Vakuumbedampfung verwendet wird, um die erste Metallschicht an die Polymerschicht anzukleben und um die zweite Metallschicht an der ersten Metallschicht anzukleben, wobei die Bedampfung der zweiten Metallschicht auf die erste Metallschicht begonnen wird, nachdem zumindest der größte Teil der Legierung der ersten Metallschicht auf die Polymerschicht vakuumgedampft worden ist.

26. Verfahren nach einem der Ansprüche 22 bis 25, worin die erste Metallschicht und/oder die zweite Metallschicht und/oder die Polymerschicht wie in einem der Ansprüche 5 bis 12 definiert sind.

27. Verfahren nach einem der Ansprüche 22 bis 26, worin das Metall der ersten Metallschicht eine Solidustemperatur (in Kelvin) zwischen 85 und 98% der Bildungstemperatur (in Kelvin) des thermoplastischen Polymers hat und eine Liquidustemperatur (in Kelvin) zwischen 102 und 150% der Bildungstemperatur (in Kelvin) des thermoplastischen Polymers und das Metall der zweiten Metallschicht eine Liquidustemperatur unterhalb der Liquidustemperatur der Metallegierung der ersten Metallschicht hat.

28. Verfahren nach Anspruch 22, worin die ersten Metallschicht aus einem Metall, ausgewählt aus Kupfer, Silber, Nickel und Mangan gebildet wird und die zweite Metallschicht aus einem Metall oder einer Legierung gebildet wird, wobei die zweite Metallschicht in einem solchen proportionalen Verhältnis im Hindblick auf die erste Metallschicht vorliegt, daß die beiden Metallschichten, wenn sie zusammengenommen werden und erhitzt werden auf die Bildungstemperatur der Polymerschicht eine abgeschiedene Legierung bilden, wobei die abgeschiedene Legierung eine Schmelztemperatur (in Kelvin) zwischen 80 und 135% der Bildungstemperatur (in Kelvin) der Polymerschicht hat.

29. Verfahren nach Anspruch 28, worin die erste Metallschicht eine Dicke von 0,005 bis 0,02 µm (50 bis 300Å) hat.

30. Verfahren nach Anspruch 22, worin die erste Metallschicht aus einer normalerwise festen Legierung gebildet wird und in einem solchen proportionalen Verhältnis im Hindblick auf die zweiten Metallschicht vorliegt, daß die beiden Metallischichten, wenn sie zusammengenommen werden und erhitzt werden auf eine spezifische Temperatur eine abgeschiedene Legierung umfassen, wobei die spezifische Temperatur (1) zwischen der Solidustemperatur und der Liquidustemperatur der ersten Metallschicht liegt und (2) größer ist als die Liquidustemperatur der zweiten Metallschicht, wobei die abgeschiedene Metallegierung eine Schmelztemperatur (in Kelvin) zwischen 80 und 135% der Bildungstemperatur (in Kelvin) des thermoplastischen Polymers hat.

**Revendications**

1. Structure composite multicouche métal en couche duplex/polymère organique, comportant au

16

0 130 834

moins une couche polymère thermoplastique, normalement solide, pouvant être mise en forme, ainsi qu'une première couche métallique, normalement solide, ayant intimement adhéré à une surface plane de la couche polymère, caractérisée en ce que

la première couche métallique est formée d'un alliage ou d'un métal choisi parmi le cuivre, l'argent, le nickel et le manganèse,

on a fait adhérer intimement à la première couche métallique une seconde couche métallique, normalement solide, formée d'un alliage ou d'un métal, et

la relation entre les matériaux de la première couche et de la seconde couche est telle qu'une phase métallique solide est maintenue en contact intime avec au moins une portion de la couche polymère à sa température de mise en forme et que l'on a l'une ou l'autre des conditions suivantes:

a) la première couche métallique est formée d'un alliage fondant à une température située entre 85 et 150 pour cent de la température de mise en forme de la couche polymère et la seconde couche métallique est formée d'un alliage ou d'un métal fondant à une température inférieure à la température de fusion dudit alliage de la première couche métallique, ou bien

b) lorsqu'on les chauffe ensemble à une température (1) qui, si la première couche métallique est formée d'un alliage, se situe entre la température du solidus et la température du liquidus de la première couche métallique et est supérieure à la température du liquidus de la seconde couche métallique, ou à une température (2) qui, si la première couche métallique est formée d'un seul métal, se situe entre la température de mise en forme et la température de dégradation de la couche polymère, la première et la seconde couches métalliques forment un alliage qui résulte d'une ségrégation et fond à une température située entre 80 et 135 pour cent de la température de mise en forme de la couche polymère.

toutes les températures étant exprimés en degrés Kelvin.

2. Structure composite selon la revendication 1, dans laquelle l'épaisseur de la première couche métallique se situe entre 0.005 et 1 micron.

3. Structure composite selon la revendication 2, dans laquelle l'épaisseur de la première couche métallique se situe entre 0.01 et 0.5 micron.

4. Structure composite selon l'une quelconque des revendications précédentes, dans laquelle la première couche métallique est formée d'un alliage qui fond à une température (en degrés Kelvin) située entre 85 et 150 pour cent de la température de mise en forme (en degrés Kelvin) de la couche polymère thermoplastique et dans laquelle la seconde couche métallique est formée d'un méta ou d'un alliage qui fond à une température inférieure à la température de fusion dudit alliage de la première couche métallique.

5. Structure composite selon l'une quelconque des revendications précédentes, dans laquelle l'alliage de la première couche métallique a une température du solidus (en degrés Kelvin) située entre 85 et 98 pour cent de la température de mise en forme (en degrés Kelvin) de la couche polymère thermoplastique et - une température du liquidus (en degrés Kelvin) située entre 102 et 150 pour cent de la température de mise en forme (en degrés Kelvin) de la couche polymère thermoplastique.

6. Structure composite selon l'une quelconque des revendications précédentes, dans laquelle l'alliage de la première couche métallique est un alliage contenant deux ou plus métaux choisis parmi le cadmium, l'indium, l'étain, l'antimoine, le plomb, le bismuth et le zinc.

7. Structure composite selon la revendication 6, dans laquelle l'alliage contient également du cuivre dans une teneur de 5 à 40 pour cent en poids de l'alliage.

8. Structure composite selon la revendication 6, dans lquelle l'alliage contient également de l'argent dans une teneur de 5 à 75 pour cent du poids de l'alliage.

9. Structure composite selon l'une quelconque des revendications précédentes, dans laquelle la seconde couche métallique est formée d'un alliage contenant deux ou plus métaux choisis parmi le cadmium, l'indium, l'étain, l'antimoine, le plomb, le bismuth et le zinc.

10. Structure composite selon la revendication 9, dans laquelle la seconde couche métallique présente une température du solidus, une température du liquidus et une température de l'eutectique.

11. Structure composite selon la revendication 10, dans laquelle la seconde couche métallique est formée d'un alliage binaire choisi parmi étain-plomb, plomb-bismuth, indium-étain, bismuth-étain, bismuth-cadmium, bismuth-indium, cadmium-indium, cadmium-zinc et cadmium-étant et présentant une température du solidus qui se situe à moins de 5 degrés Kelvin de la température de l'eutectique.

12. Structure composite selon l'une quelconque des revendications précédentes, dans laquelle la couche polymère thermoplastique est choisie parmi des polycarbonates, des polyesters, des résines acryliques, les polymères aromatiques du monovinylidène, les polymères des halogénures de vinyle, les polymères des halogénures de vinylidène et les polyacétals.

13. Structure composite selon l'une quelconque des revendications précédentes, dans laquelle la première et la seconde couches métalliques sont, l'une par rapport à l'autre, dans une proportion telle que, lorsqu'on les prend ensemble et qu'on les chauffe à une température (1) qui, se la première couche métallique est formée d'un alliage, se situe entre la température du solidus et la température du liquidus de la première couche métallique et est supérieure à la température du liquidus de la seconde couche métallique, ou à une température (2) qui, si la première couche métallique est formée d'un seul métal, se situe entre la température de dégradation de la couche polymère, elles forment un alliage qui résulte d'une

17

ségrégation et présente une température de fusion (en degrés Kelvin) située entre 80 et 135 pour cent de la température de mise en forme (en degrés Kelvin) du polymère thermoplastique.

14. Structure composite selon la revendication 13, dans laquelle le métal de la première couche métallique présente une température du solidus (en degrés Kelvin) située entre 85 et 98 pour cent de la température de mise en forme (en degrés Kelvin) du polymère thermoplastique et une température du liquidus (en degrés Kelvin) située entre 102 et 150 pour cent de la température de mise en forme (en degrés Kelvin) du polymère thermoplastique, et dans laquelle la seconde couche métallique présente une température du liquidus inférieure à la température du liquidus de la première couche métallique.

15. Structure composite selon la revendication 13 ou la revendication 14 dans laquelle la première couche métallique est, par rapport à la seconde couche métallique, d'une composition et d'une proportion telles que les phases intermétalliques formées par interaction entre les couches métalliques n'accroissent pas la température du liquidus (en degrés Kelvin) de la seconde couche métallique au-delà de 135 pour cent de la température de mise en forme (en degrés Kelvin) de la couche polymère thermoplastique.

16. Structure composite selon la revendication 10, dans laquelle la première couche métallique est, par rapport à la seconde couche métallique, d'une composition et d'une proportion telles que les phases intermétalliques formées par interaction entre les couches métalliques n'accroissent pas la température du liquidus de la seconde couche métallique de plus de 30° Kelvin au-dessus de la température du point eutectique de la seconde couche métallique.

17. Structure métallique selon la revendication 16, dans laquelle le métal de la seconde couche métallique est au moins à 75 pour cent en poids liquide, sur la base du poids de la seconde couche métallique, à une température qui n'est pas supérieure de plus de 25° Kelvin à la température du point eutectique de la seconde couche métallique.

18. Structure composite selon la revendication 17, dans laquelle le métal de la seconde couche métallique est un alliage qui comprend au moins 30 pour cent en poids d'étain et au moins 40 pour cent en poids de bismuth, les deux pourcentages étant basés sur le poids de l'alliage.

19. Structure composite selon la revendication 1, dans laquelle la première couche métallique est formée d'un métal choisi parmi le cuivre, l'argent, le nickel et le manganèse; et dans laquelle la seconde couche métallique est formée d'un métal ou d'un alliage, ladite seconde couche métallique étant, par rapport à la première couche métallique, dans une proportion telle que les deux couches métalliques, lorsqu'on les prend ensemble et qu'on les chauffe à la température de mise en forme de la couche polymère, constituent un alliage, résultant de la ségrégation, d'au moins deux métaux, l'alliage résultant de ségrégation présentant une température de fusion (en degrés Kelvin) située entre 80 et 135 pour cent de la température de mise en forme (en degrés Kelvin) de la couche polymère.

20. Structure composite selon la revendication 19, dans laquelle la première couche métallique a une épaisseur allant de 0.005 à 0.03 microns (50 à 300 Angstroms).

21. Structure composite selon la revendication 1, présentant une ou plusieurs des caractéristiques suivantes:

a) le polymère thermoplastique est un polycarbonate, de préférence dérivé d'un alkylidène de bis (hydroxy-4 phénol) ou d'un combinaison d'un alkylidène de bis (hydroxy-4 phénol) avec un diol (glycol) du type phénolphtaléine;

b) la couche polymère thermoplastique a une épaisseur qui est sur la plage allant de 2 à 1000 microns, de préférence allant de 10 à 500 microns;

c) l'alliage de la première couche métallique présente une température du liquidus (en degrés Kelvin) située en 102 et 150 pour cent de la température de mise en forme (en degrés Kelvin) du polymère thermoplastique;

d) la seconde couche métallique est formée d'un alliage binaire dont la température du solidus se situe à moins de 5° Kelvin de la température du point eutectique dudit alliage binaire;

e) la première couche métallique est formée d'une composition du même alliage binaire différente de celle de la seconde couche métallique;

f) l'épaisseur de la première couche métallique est de 0.03 à 0.3 micron;

g) le métal ou l'alliage de la première couche métallique présente un module de Young de valeur supérieure à 700000 kg/cm$^2$ et l'épaisseur de ladite couche est inférieur à 0.1 micron.

22. Procédé de préparation d'une structure composite multicouche métal en couche duplex/polyvère organique selon la revendication 1, ledit procédé comportant le fait de disposer d'au moins une couche d'un polymère normalement solide, pouvant être mis en forme, le fait d'avoir fait intimement adhérer à une surface plane de la couche polymère une première couche métallique formée d'un alliage ou d'un métal choisi parmi le cuivre, l'argent, le nickel et le manganèse, et le fait de faire intimement adhérer à la première couche métallique une seconde couche métallique, normalement solide, formée d'un alliage ou d'un métal, étant précisé que la relation entre les matériaux de la première couche et de la seconde couche est telle qu'un phase métallique solide est maintenue en contact intime avec au moins une portion de la couche polymère à sa température de mise en forme et que l'on a l'une ou l'autre des conditions suivantes:

a) la première couche métallique est formée d'un alliage fondant à une température située entre 85 et 150 pour cent de la température de mise en forme de la couche polymère et la seconde couche métallique est formée d'un alliage ou d'un métal fondant à une température inféreiure à la température de fusion dudit alliage de la première couche métallique, ou bien

b) lorsqu'on les chauffe ensemble à une température (1) qui, si la première couche métallique est formée d'un alliage, se situe entre la température du solidus et la température du liquidus de la première couche métallique et est supérieure à la température du liquidus de la seconde couche métallique, ou à une température (2) qui, si la première couche métallique est formée d'un seul métal, se situe entre la température de mise en forme et la température de dégradation de la couche polymère, la première et la seconde couches métalliques forment un alliage qui résulte d'une ségrégation et fond à une température située entre 80 et 135 pour cent de la température de mise en forme de la couche polymère.

toutes les températures étant exprimées en degrés Kelvin.

23. Procédé selon la revendication 22, dans lequel la première couche métallique est formée d'un alliage qui fond à une température (en degrés Kelvin) située 85 et 150 pour cent de la température de mise en forme (en degrés kelvin) de la couche polymère thermoplastique et dans laquelle la seconde couche métallique est formée d'un métal ou d'un alliage qui fond à une température inférieure à la température du fusion dudit alliage de la première couche métallique.

24. Procédé selon la revendication 22 ou la revendication 23 dans lequel on applique la seconde couche métallique sur la première couche métallique pendant que le métal de la seconde couche métallique se trouve à une température supérieure à sa température du liquidus et entre la température du solidus et la température du liquidus de la première couche métallique.

25. Procédé selon la revendication 22 ou la revendication 23, dans lequel on utilise le dépôt sous vide pour faire adhérer la première couche métallique à la couche polymère et pour faire adhérer la seconde couche métallique à la première couche métallique, le dépôt de la seconde couche métallique sur la première couche métallique étant mis en route après qu'au moins une portion importante de l'alliage de la première couche métallique s'est déposée sous vide sur la couche polymère.

26. Procédé selon l'une quelconque des revendications 22 à 25, dans lequel la première couche métallique et/ou la seconde couche métallique et/ou la couche polymère sont telles que définies dans l'une quelconque des revendications 5 à 12.

27. Procédé selon l'une quelconque des revendications 22 à 26, dans lequel le métal de la première couche métallique présente une température du solidus (en degrés Kelvin) située entre 85 et 98 pour cent de la température de mise en forme (en degrés Kelvin) du polymère thermoplastique et une température du liquidus (en degrés Kelvin) située entre 102 et 150 pour cent de la température de mise en forme (en degrés Kelvin) du polymère thermoplastique; et dans lequel le métal de la seconde couche métallique présente une température du liquidus inférieure à la température du liquidus de l'alliage métallique de la première couche métallique.

28. Procédé selon la revendication 22, dans lequel la première couche métallique est formée d'un métal choisi parmi le cuivre, l'argent, le nickel et le manganèse; et dans lequel la seconde couche métallique est formée d'un métal ou d'un alliage, ladite seconde couche métallique étant, par rapport à la première couche métallique, dans une proportion telle que les deux couches métalliques, lorsqu'on les prend ensemble et qu'on les chauffe à la température de la couche polymère, forment un alliage résultant de la ségrégation, l'alliage résultant de ségrégation présentant une température de fusion (en degrés Kelvin) située en 80 et 135 pour cent de la température de mise en forme (en degrés Kelvin) de la couche polymère.

29. Procédé selon la revendication 28, dans lequel la première couche métallique a une épaisseur allant de 0.005 à 0.02 micron (50 à 300 Angstroms).

30. Procédé selon la revendication 22, dans lequel la premiére couche métallique est formée d'un alliage normalement solide et se trouve, par rapport à la seconde couche métallique, dans une proportion telle que les deux couches métalliques, lorsqu'on les prend ensemble et qu'on les chauffe à une température spécifique, constituent un alliage résultant de la ségrégation, la température spécifique étant (1) située entre la température du solidus et la température du liquidus de la première couche métallique et (2) supérieure à la température du liquidus de la seconde couche métallique, l'alliage métallique résultant de la ségrégation présentant une température de fusion (en degrés Kelvin) située entre 80 et 135 pour cent de la température de mise en forme (en degrés Kelvin) du polymère thermoplastique.